# DEMANDE DE BREVET EUROPEEN

(11) **EP 4 717 917 A1**
(43) Date de publication de la demande: **01.04.2026**
(21) Numéro de dépôt: 25192721.6
(22) Date de dépôt: 30.07.2025
(51) Int. Cl.: F04B 15/08, F04B 37/20, F04B 39/00, F04B 39/04, F04B 53/00, F04B 53/02, F04B 53/14, F04B 53/16

(54) **PISTON POUR UNE MACHINE À FLUIDE ET POURVU D'UN SYSTÈME DE PLAQUAGE DE JOINTS, MACHINE À FLUIDE COMPRENANT UN TEL PISTON**

(30) Priorité: 30.09.2024 FR 2410445
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: ABDO, Youssef, 75321 PARIS CEDEX 07 (FR); COLEIRO, Gaetan, 75321 PARIS CEDEX 07 (FR); PETIPAS, Guillaume, 75321 PARIS CEDEX 07 (FR); RIOS, Loïc, 75321 PARIS CEDEX 07 (FR)
(74) Mandataire: Air Liquide

(57) **Abrégé**

Piston (3) pour une machine (1) à fluide, le piston (3) étant destiné à être monté au moins en partie à l'intérieur d'une chemise (2) de la machine (1) selon un mouvement relatif de va-et-vient par rapport à la chemise (2), le piston (3) s'étendant suivant une direction principale (Y) et comprenant une tête (31) qui comporte une première extrémité (31a) du piston (3), et un manche (33) qui comporte une deuxième extrémité (33a) du piston (3), la première extrémité (31a) du piston (3) étant destinée à délimiter avec la chemise (2) de la machine (1) une chambre (4) de détente et/ou de compression du fluide, le manche (33) comprenant une paroi latérale (34) qui est pourvue d'au moins une gorge annulaire définie entre un premier créneau (5a) et un deuxième créneau (5b), la au moins une gorge annulaire étant munie d'au moins un joint (6) d'étanchéité destiné à coopérer de manière étanche avec une paroi latérale (21) de la chemise (2) de la machine (1), le au moins un joint d'étanchéité (6) étant pourvu d'un orifice de passage destiné à permettre un écoulement d'un flux de fluide depuis la chambre (4) de détente et/ou compression vers la deuxième extrémité (33a) du piston (3),
caractérisé en ce que le au moins un joint (6) d'étanchéité comprend au moins une cavité (8) distincte de l'orifice de passage, la cavité (8) étant configurée pour abriter un système (9) de plaquage pour plaquer le joint d'étanchéité (6) contre le premier créneau (5a) et contre le deuxième créneau (5b), suivant la direction principale (Y) du piston (3).

## Description

L'invention concerne un piston pour une machine à fluide et pourvu d'un système de plaquage de joints. Il s'agit de joints fuyards comprenant au moins un orifice d'écoulement du fluide.

L'invention concerne également une machine à fluide comprenant un tel piston. La machine à fluide peut être une pompe ou un compresseur. Le fluide considéré peut être à l'état cryogénique.

Un piston pour une machine à fluide est destiné à être monté au moins en partie à l'intérieur d'une chemise de la machine, selon un mouvement relatif de va-et-vient par rapport à la chemise.

Le piston s'étend suivant une direction principale et comprend une tête qui comporte une première extrémité du piston, ainsi qu'un manche qui comporte une deuxième extrémité du piston. La première extrémité et la deuxième extrémité du piston sont définies suivant la direction principale.

La première extrémité du piston est destinée à former avec la chemise de la machine une chambre de détente et/ou de compression du fluide.

Le manche comprend une paroi latérale qui est pourvue d'au moins une gorge annulaire définie entre un premier créneau et un deuxième créneau.

En particulier, la gorge annulaire est munie d'au moins un joint d'étanchéité destiné à coopérer avec une paroi latérale de la chemise de la machine. Le au moins un joint d'étanchéité est pourvu d'un orifice de passage destiné à permettre un écoulement d'un flux du fluide depuis la chambre de détente et/ou compression vers la deuxième extrémité du piston.

Le ou les joints d'étanchéité assurent principalement l'étanchéité de la chambre de compression sans entraver le mouvement relatif du piston par rapport à la chemise. En d'autres termes, le ou les joints d'étanchéité permettent au piston de se déplacer par rapport à la chemise quasiment sans frottement.

En outre, le ou les joints d'étanchéité assurent un bon fonctionnement de la machine à fluide, et contribuent pour une large part à atteindre des spécifications de celle-ci, notamment le débit pompé.

Enfin, le ou les joints permettent de réduire les fuites et les BOG (de l'anglais Boil off Gas).

Les BOG représentent un fluide vaporisé de manière irréversible et qui ne peut être reliquéfié sans aucun échange froid externe ou extraction de travail. Les BOG peuvent être la conséquence d'une génération d'entropie par des entrées de chaleur (imperfection de la qualité de l'isolation) dans la chambre de détente, ou résulter de frottements et/ou une dilatation isenthalpique Joules-Thomson due à des fuites.

Pour assurer les différentes fonctions décrites ci-dessus, les joints d'étanchéité doivent être présents en nombre suffisant, lequel dépend des performances de chaque joint, de la pression en jeu, et d'autres facteurs tels que le fluide lui-même. En outre, pour un fonctionnement optimal de la machine à fluide à des pressions élevées et à des températures extrêmement basses, les joints d'étanchéité doivent avoir une bonne intégrité mécanique.

Dans la plupart des cas, une paire de joints d'étanchéité est prévue dans chaque gorge : un premier joint d'étanchéité en contact avec un premier créneau de la gorge, et un deuxième joint d'étanchéité en contact avec un deuxième créneau de la gorge. Le premier joint d'étanchéité précède le deuxième joint d'étanchéité en partant de la tête du piston.

Le premier joint d'étanchéité est muni d'un premier orifice de passage. Le deuxième joint d'étanchéité est muni d'un deuxième orifice de passage. En outre, le premier joint d'étanchéité et le deuxième joint d'étanchéité sont disposés dans la gorge de telle manière que leurs orifices de passage respectifs soient décalés angulairement l'un par rapport l'autre autour de l'axe principal du piston.

Ainsi, le flux de fluide provenant de la chambre de compression emprunte un chemin de fuite qui passe par le premier orifice du premier joint d'étanchéité, puis à l'interface entre les deux joints d'étanchéité, avant de passer par le deuxième orifice du deuxième joint d'étanchéité.

Lorsqu'un jeu axial (c'est-à-dire un jeu suivant la direction principale du piston) se forme entre le premier joint d'étanchéité et le premier créneau, le flux du fluide provenant de la chambre de compression ne passe plus nécessairement par le premier orifice du premier joint d'étanchéité. Une partie du flux contourne le premier orifice de passage et le deuxième orifice de passage pour s'écouler dans l'intervalle prévu entre les joints et la paroi latérale du piston et/ou dans l'intervalle prévu entre les joints et la paroi latérale de la chemise.

La modification du chemin de fuite signifie une perte d'étanchéité et une dégradation de performances de la machine.

Ainsi, il apparaît un besoin de développer de nouveaux pistons dans lesquels le flux provenant de la chambre de compression passe pour l'essentiel uniquement par les orifices de passage prévus à cet effet sans contourner les joints d'étanchéité.

A cet effet, selon un premier aspect, l'invention concerne un piston, du reste conforme à la définition générique qu'en donne le préambule ci-dessus.

Selon ce premier aspect de l'invention, le au moins un joint comprend au moins une cavité distincte de l'orifice de passage, la cavité étant configurée pour abriter un système de plaquage du joint d'étanchéité contre le premier créneau et contre le deuxième créneau suivant la direction principale du piston.

Ainsi, l'invention ouvre la possibilité d'introduire dans le joint d'étanchéité un système de plaquage de celui-ci suivant la direction principale du piston. Ce plaquage élimine le risque d'apparition d'un jeu axial entre le joint d'étanchéité et le premier créneau d'une part, et entre le joint d'étanchéité et le deuxième créneau d'autre part.

D'autres modes de réalisation du piston comprennent les caractéristiques ci-dessous :
- le au moins un joint d'étanchéité comprend en une seule et même pièce deux lèvres latérales : une première lèvre disposée en regard du premier créneau, et une deuxième lèvre disposée en regard du deuxième créneau,
- les lèvres définissent entre elles la cavité destinée à abriter le système de plaquage,
- deux joints d'étanchéité distincts sont disposés en vis-à-vis dans la au moins une gorge : un premier joint en regard du premier créneau et un deuxième joint en regard du deuxième créneau,
- les deux joints présentent des faces en regard qui sont pourvues chacune d'une encoche,
- les encoches respectives des joints sont alignées pour former la cavité destinée à abriter le système de plaquage,
- le système de plaquage est de type mécanique et/ou fluidique,
- le système de plaquage se présente sous la forme d'un insert disposé à demeure dans la cavité,
- le système de plaquage comprend une masse de fluide en provenance de la chambre de compression et stockée dans la cavité,
- la masse de fluide est configurée pour plaquer suivant la direction principale du piston la première lèvre contre le premier créneau et la deuxième lèvre contre le deuxième créneau,
- l'insert est configuré pour plaquer suivant la direction principale du piston la première lèvre contre le premier créneau et la deuxième lèvre contre le deuxième créneau,
- la masse de fluide est configurée pour plaquer suivant la direction principale du piston le premier joint contre le premier créneau, et le deuxième joint contre le deuxième créneau,
- l'insert est configuré pour plaquer suivant la direction principale du piston le premier joint contre le premier créneau, et le deuxième joint contre le deuxième créneau,
- l'insert et le au moins un joint sont constitués respectivement de matériaux présentant des coefficients de dilatation thermique différents, le coefficient de dilatation thermique de l'insert étant supérieur au coefficient de dilatation thermique du joint.

Selon un deuxième aspect, l'invention concerne une machine à fluide, et notamment à fluide cryogénique, par exemple une pompe pour fluide cryogénique tel que de l'hydrogène, comprenant une chemise et un piston selon l'un quelconque des modes de réalisation précédents, le piston étant inséré au moins en partie à l'intérieur de la chemise de sorte à former avec la chemise une chambre de détente et/ou de compression du fluide, le piston et la chemise étant configurés pour être mobiles l'un par rapport à l'autre selon un mouvement relatif de va-et-vient.

D'autres particularités et avantages apparaîtront à la lecture de la description ci-après, faite en référence aux figures suivantes dans lesquelles :
[Fig. 1] est une vue de coupe illustrant un premier mode de réalisation de la machine à fluide selon l'invention, la machine comprenant une chemise, un piston, un ensemble de joint(s) d'étanchéité, et un système de créneau(x) amovible le long du piston, les joints d'étanchéité étant pourvus chacun d'une cavité et d'un système de plaquage, le piston comprenant entre deux créneaux un seul joint d'étanchéité.
[Fig. 2] est une vue de coupe partielle illustrant un autre exemple de la machine selon le premier mode de réalisation, le système de créneau(x) étant fixe par rapport au piston.
[Fig. 3] est une vue de coupe partielle illustrant un autre exemple de la machine à fluide selon le premier mode de réalisation, le joint présentant une forme en C qui délimite une cavité contenant le système de plaquage, la cavité étant tournée vers la chemise.
[Fig. 4] est une vue de coupe partielle illustrant un autre exemple de la machine à fluide selon le premier mode de réalisation, le joint présentant une forme en forme de C qui délimite une cavité illustrée sans le système de plaquage, la cavité étant tournée vers la chemise.
[Fig. 5] est une vue de coupe partielle illustrant un autre exemple de la machine à fluide selon le premier mode de réalisation, le joint présentant une forme en C, le joint et le système de plaquage étant tournés vers le piston.
[Fig. 6] est une vue de coupe partielle illustrant un autre exemple de la machine à fluide selon le premier mode de réalisation, le joint présentant un profil en Z qui forme deux cavités configurées pour recevoir le système de plaquage.
[Fig. 7] est une vue de coupe partielle illustrant un exemple de la machine à fluide selon un deuxième mode de réalisation, le piston comprenant entre deux créneaux consécutifs deux joints distincts comportant chacun un logement, les logements respectifs des joints formant la cavité destinée à recevoir le système de plaquage, la cavité étant tournée vers la chemise.
[Fig. 8] est une vue de coupe partielle illustrant un autre exemple de la machine selon le deuxième mode de réalisation, la cavité étant tournée vers le piston.
[Fig. 9] est une vue de coupe partielle illustrant un autre exemple de la machine selon le deuxième mode de réalisation, la cavité étant fermée et située selon une position médiane entre la chemise et le piston.
[Fig. 10] est une vue de coupe partielle illustrant un troisième mode de réalisation de la machine selon l'invention, le piston comprenant entre deux créneaux consécutifs deux joints distincts séparés par un intervalle configuré pour recevoir le système de plaquage en forme de C.
[Fig. 11] est une vue de coupe partielle illustrant un autre exemple de la machine selon le troisième mode de réalisation, le système de plaquage comprenant une série d'inserts en V.

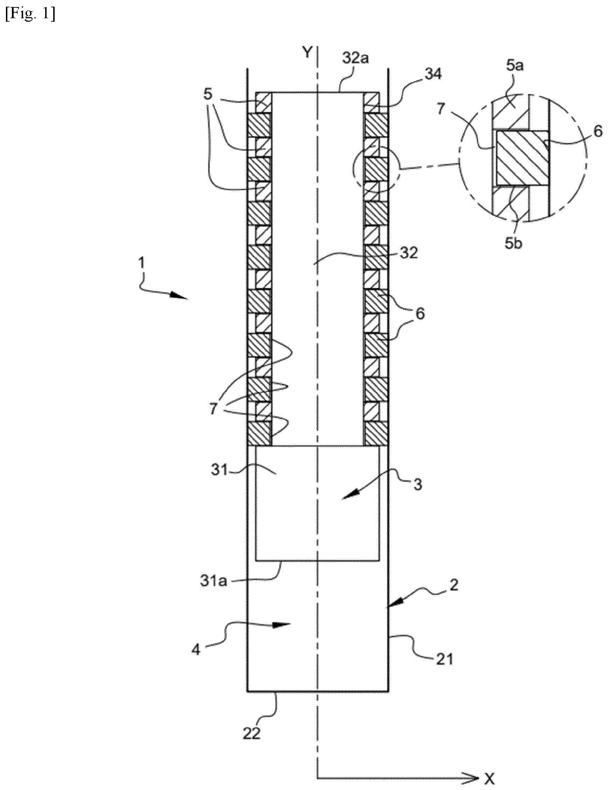

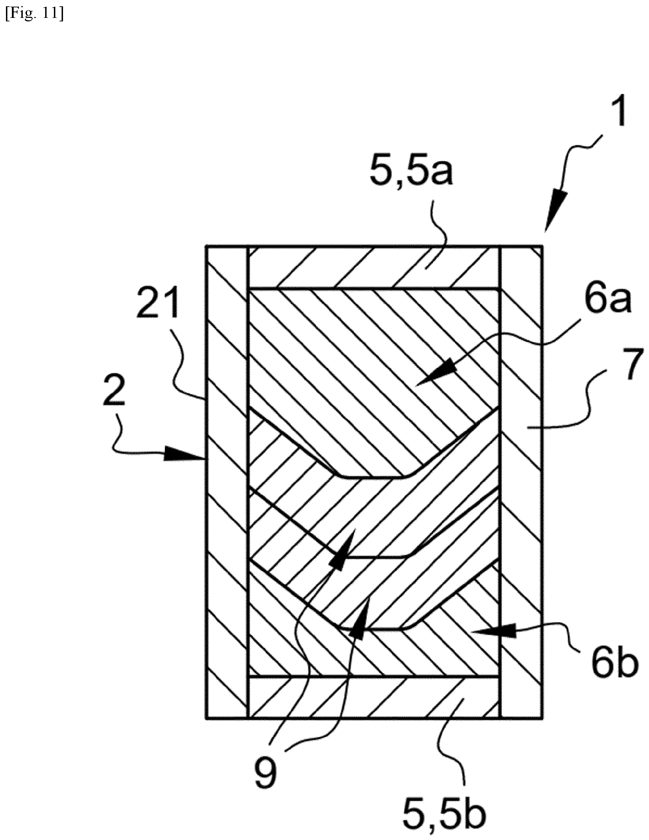

Comme illustré aux [Fig. 1] à [Fig. 11], l'invention concerne une machine 1 à fluide, et notamment une machine à fluide cryogénique. La machine 1 à fluide peut être une pompe ou un compresseur pour transférer un fluide. Le fluide considéré peut être de type cryogénique à une température inférieure à 150°C. Il peut s'agir de l'hydrogène.

En référence à la [Fig. 1], la machine 1 à fluide s'étend suivant un axe principal Y, désigné également par les expressions "axe longitudinal" ou "direction longitudinale" ou encore "direction principale".

La machine 1 à fluide présente également un axe transversal X qui est perpendiculaire à l'axe principal Y. L'axe transversal X est également désigné dans la suite par les expressions « axe radial » ou « direction radiale ».

La machine 1 à fluide comprend une chemise 2 et un piston 3 qui est disposé au moins en partie à l'intérieur de la chemise 2. En particulier, le piston 3 et la chemise 2 sont configurés pour être montés mobiles l'un par rapport à l'autre selon un mouvement relatif de va-et-vient suivant la direction principale Y.

Le piston 3 et la chemise 2 forment une chambre 4 de compression et/ou détente destinée à recevoir et refouler un fluide pour une détente et/ou une compression selon un cycle comprenant une phase d'admission et une phase de refoulement du fluide dans la chambre 4 de compression et/ou de détente.

En d'autres termes, la chambre 4 de compression et/ou de détente présente un volume qui varie en fonction de la position relative du piston 3 par rapport à la chemise 2, et en fonction de la phase (admission ou refoulement) du cycle d'admission et de refoulement du fluide dans la chambre 4.

Pour assurer leur mouvement relatif de l'un par rapport à l'autre, le piston 3 ou la chemise 2 peut être relié à un organe moteur (non illustré).

Plus en détail, le piston 3 comprend une tête 31 qui s'engage à l'intérieur de la chemise 2, ainsi qu'un manche 32 qui est reliée à la tête 31. La tête 31 forme avec le manche 32 un épaulement. Le manche 32 est relié à une tige (non illustrée) destinée à être disposée à l'extérieur de la chemise 2 et peut être actionnée par l'organe moteur.

En particulier, la tête 31 du piston 3 comporte une première extrémité 31a. Le manche 32 du piston 3 comporte une deuxième extrémité 32a, opposée à la première extrémité 31a.

La chemise 2 comprend une paroi latérale 21 et un fond 22 qui forment un logement dans lequel s'engage la tête 31 du piston 3. Ainsi, le fond 22 et la paroi latérale 21 de la chemise 2, ainsi que la première extrémité 31a du piston 3 délimitent la chambre 4 de détente et/ou de compression.

Par ailleurs, la paroi latérale 21 et/ou le fond 22 de la chemise 2 sont pourvus d'au moins un orifice d'admission et d'au moins un orifice de sortie. Ces orifices communiquent avec la chambre 4 de compression et/ou de détente.

Toujours en référence à la [Fig. 1], la machine 1 comprend un système de créneau(x) 5 disposé sur une paroi latérale 34 du piston 3, le long de la direction principale Y. En particulier, le système de créneau(x) est disposé sur une portion de la paroi latérale 34 située au niveau du manche 32 du piston 3.

De façon avantageuse, le système de créneau(x) 5 s'étend en O autour de la paroi latérale 34 du piston 3, c'est-à-dire, le système de créneau(x) 5 est fermé autour de la paroi latérale 34 de la tête 31 du piston 3, dans un plan perpendiculaire à la direction Y principale.

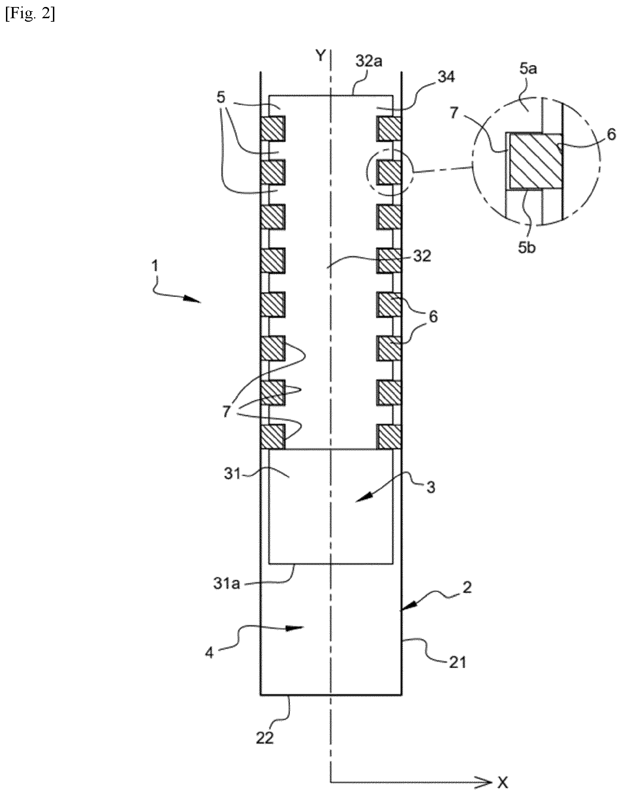

De façon avantageuse, comme illustré à la [Fig. 1], le système de créneau(X) 5 peut être réalisé séparément du piston 3. En variante illustrée à la [Fig. 2], le système de créneau(x) 5 peut former un seul corps avec le piston 3.

Lorsqu'il est réalisé séparément du piston 3, le système de créneau(x) 5 peut être assemblé à celui-ci de manière réversible. Par exemple, le système de créneau(x) 5 peut être enfilé de manière amovible le long du piston 3, et plus spécifiquement le long de la paroi latérale 34 du manche 32.

Dans sa configuration amovible par rapport au piston, le système de créneau(x) 5 est destiné à coopérer avec la paroi latérale 34 du piston 3 selon un ajustement serré et de manière étanche. Un tel ajustement serré est obtenu grâce à une contraction thermique différentielle du système de créneau(x) (5) par rapport au piston 3.

Il y a lieu de noter que l'ajustement serré et/ou l'étanchéité entre le système de créneau(x) et le piston 3 peuvent être obtenus exclusivement par la contraction thermique différentielle du système de créneau(x) par rapport au piston 3.

Le système de créneau(x) 5 s'étend en saillie radiale par rapport à la paroi latérale 34 du piston 3. Ainsi, le système de créneau(X) 5 délimite un ensemble de gorge(s), c'est-dire un ensemble de logement(s)) ou creux, destiné à recevoir un ensemble de joint(s) 6 d'étanchéité.

L'ensemble de joint(s) d'étanchéité 6 est destiné à coopérer avec la chemise 2 pour limiter un écoulement de fluide hors de la chambre 4 de détente et/ou compression.

L'expression "système de créneau(x) 5" (respectivement ensemble de gorge(s) ou ensemble de joint(s) 6" d'étanchéité désigne un système comprenant un ou plusieurs créneaux 5 (respectivement un ensemble comprenant une ou plusieurs gorges, ou un ensemble comprenant un ou plusieurs joints 6) d'étanchéité.

Dans l'exemple illustré aux [Fig. 1] et [Fig. 2], l'épaulement formé entre la tête 31 et le manche 32 du piston 3 coopère avec un premier créneau de l'ensemble de créneau(x) 5 pour former une première gorge de l'ensemble de gorge(s).

Les [Fig. 1] et [Fig. 2] illustrent chacune une machine comprenant une pluralité de créneaux, gorges et joints d'étanchéité, avec une vue agrandie d'une gorge qui est délimitée par un premier créneau 5a et un deuxième créneau 5b.

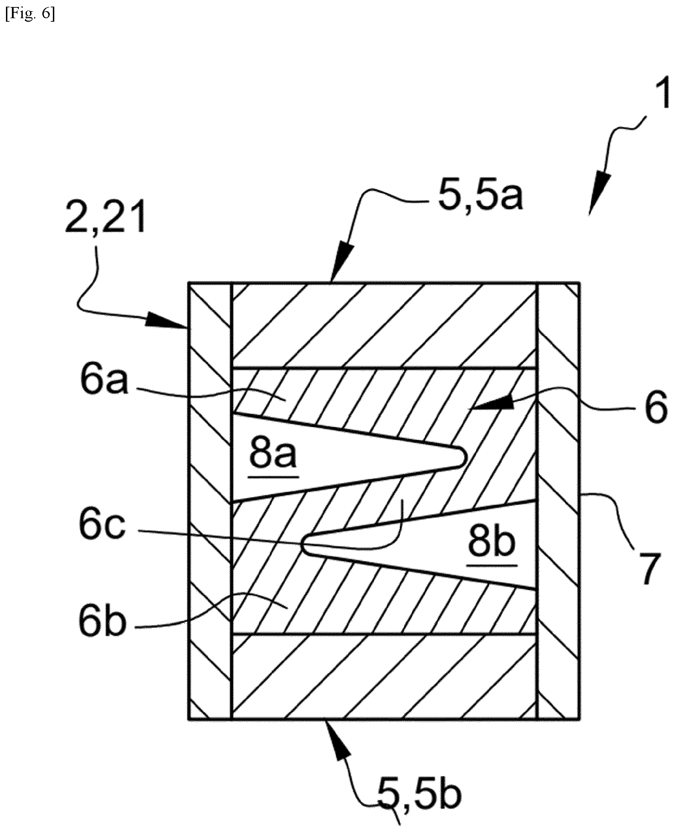

Dans un premier mode de réalisation illustré aux [Fig. 1] à [Fig. 6], chaque gorge délimitée par un premier créneau 5a et un deuxième créneau 5b est pourvue d'un seul joint d'étanchéité 6. En particulier aux [Fig. 1] et [Fig. 2], une gorge est mise en évidence avec un seul joint 6 d'étanchéité.

Le joint 6 d'étanchéité présente une face latérale extérieure destinée à coopérer avec la paroi latérale 21 de la chemise 2 selon un ajustement serré. Le joint 6 d'étanchéité présente également une face latérale intérieure destinée à être en regard de la paroi latérale 34 du piston 3. Enfin, le joint 6 d'étanchéité présente une première face transversale et une deuxième face transversale qui s'étendent entre la face latérale extérieure et la face latérale intérieure.

Dans l'exemple illustré, la première face transversale du joint 6 est disposée en regard du premier créneau 5a. La deuxième face transversale du joint 6 est disposée en regard du deuxième créneau 5b.

En outre, le joint 6 d'étanchéité présente un orifice de passage permettant un écoulement d'un flux de fluide depuis la chambre 4 de détente et/ou compression vers la deuxième extrémité 32a du piston 3. L'orifice de passage s'étend entre la première face transversale et la deuxième face transversale du joint 6 d'étanchéité.

De façon avantageuse, la machine comprend au moins un expandeur 7 qui est positionné entre le joint 6 d'étanchéité et le manche 32 du piston 3. Le au moins un expandeur 7 est destiné à plaquer le joint 6 d'étanchéité radialement (c'est-à-dire suivant la direction X) contre la paroi latérale 21 de la chemise 2.

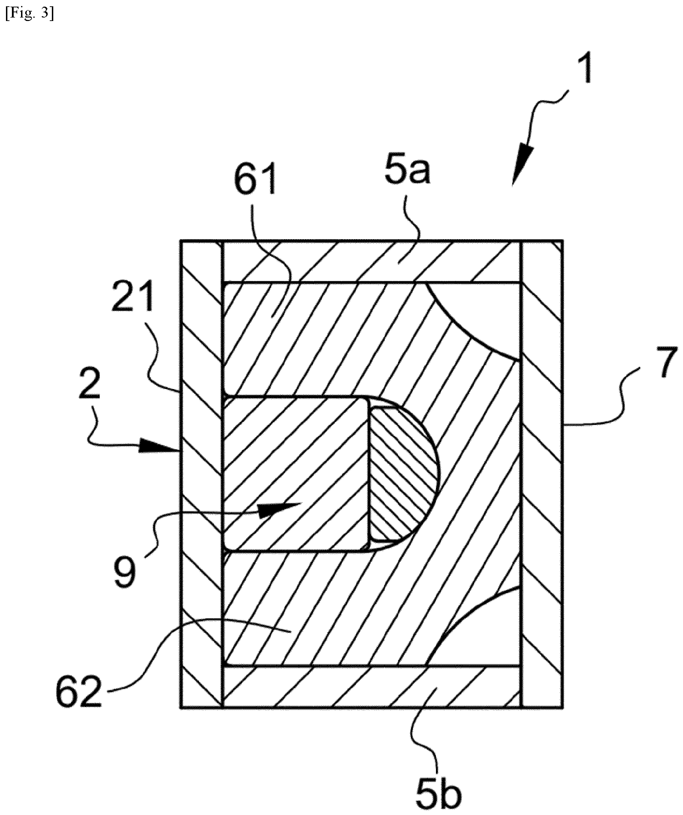

Selon l'invention, telle qu'illustrée aux [Fig. 3] à [Fig. 6], le joint 6 d'étanchéité comprend au moins une cavité 8 distincte de l'orifice de passage. La cavité 8 est configurée pour abriter un système 9 de plaquage du joint 6 d'étanchéité suivant la direction principale Y du piston 3.

Plus spécifiquement, le système de plaquage est destiné à plaquer suivant la direction Y du piston 3 le joint 6 contre le premier créneau 5a et contre le deuxième créneau 5b.

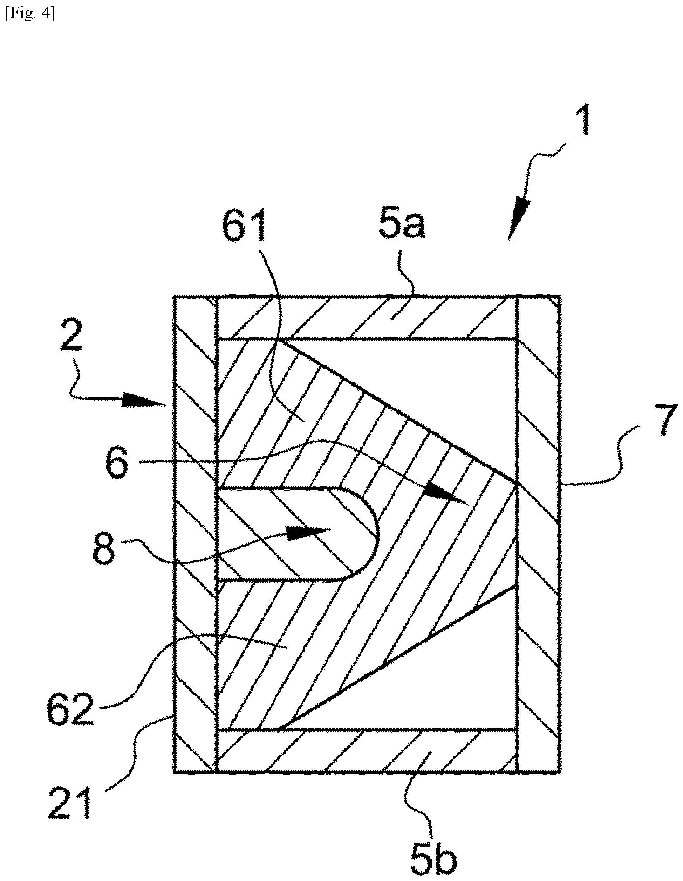

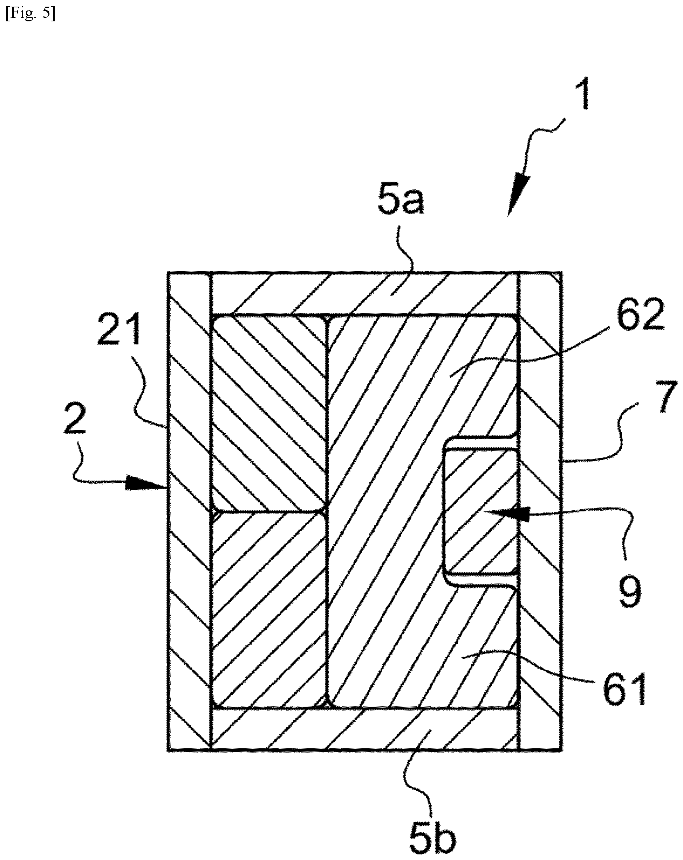

Dans les exemples illustrés aux [Fig. 3], [Fig. 4] et [Fig. 5], le joint 6 d'étanchéité présente suivant une coupe dans un plan longitudinal un profil en C.

Suivant ce plan de coupe, le joint 6 d'étanchéité comprend deux lèvres latérales : une première lèvre 62 disposée en regard du premier créneau 5a, et une deuxième lèvre 61 disposée en regard du deuxième créneau 5b. Les lèvres 61, 62 définissent entre elles la cavité 8 destinée à abriter le système de plaquage 9.

De façon avantageuse, la cavité 8 destinée à abriter le système de plaquage présente une forme annulaire.

En référence aux [Fig 3] et [Fig. 4], la cavité 8 et le système 9 de plaquage sont tournés vers la chemise 2. A la [Fig. 4], le joint 6 d'étanchéité est illustré sans le système 9 de plaquage.

En référence à la [Fig. 5], la cavité 8 et le système 9 de plaquage sont tournés vers le piston 3, en contact avec l'expandeur 7.

Dans l'exemple illustré à la [Fig. 6], le joint 6 d'étanchéité présente suivant une coupe dans un plan longitudinal un profil en Z. Le joint 6 d'étanchéité comprend alors deux branches horizontales 6a, 6b reliées par une branche oblique 6c. Les branches 6a, 6b, 6c délimitent deux cavités 8a, 8b destinées à recevoir chacune un système de plaquage.

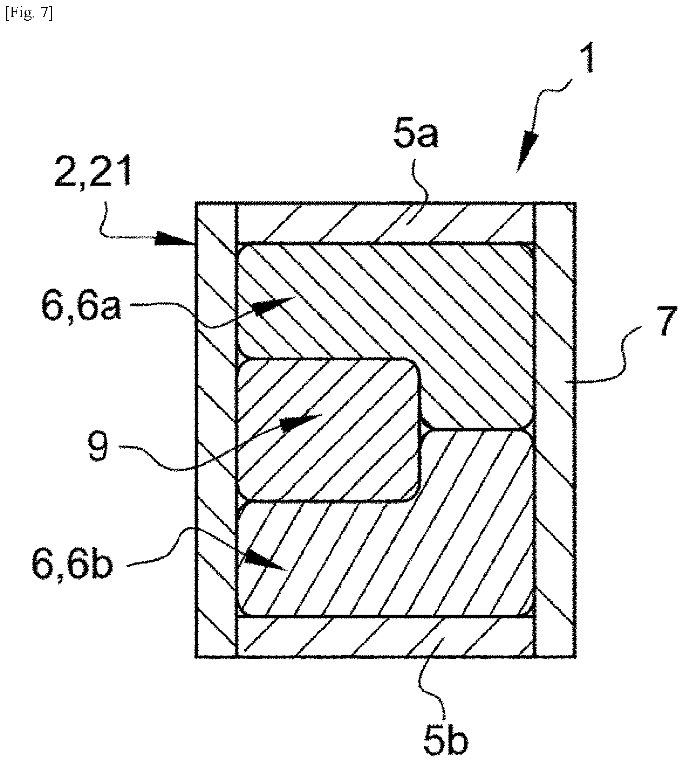

Dans un deuxième mode de réalisation illustré aux [Fig. 7] à [Fig. 11], chaque gorge contient deux joints d'étanchéité 6a, 6b distincts qui sont disposés en vis-à-vis : un premier joint 6a qui est disposé en regard du premier créneau 5a, et un deuxième joint 6b qui est disposé en regard du deuxième créneau 5b.

Plus spécifiquement, le premier joint 6a présente une première face transversale qui est disposée en regard du premier créneau 5a. Le deuxième joint 6b présente une deuxième face transversale qui est disposée en regard du deuxième créneau 5b.

De plus, le premier joint 6a comprend un premier orifice de passage. Le deuxième joint comprend un deuxième orifice de passage. Les deux orifices de passage sont angulairement décalés l'un par rapport à l'autre autour de la direction principale Y de la machine 1. Ce décalage angulaire entre les orifices de passage crée un chemin de fuite qui passe à l'interface des deux joints 6a, 6b.

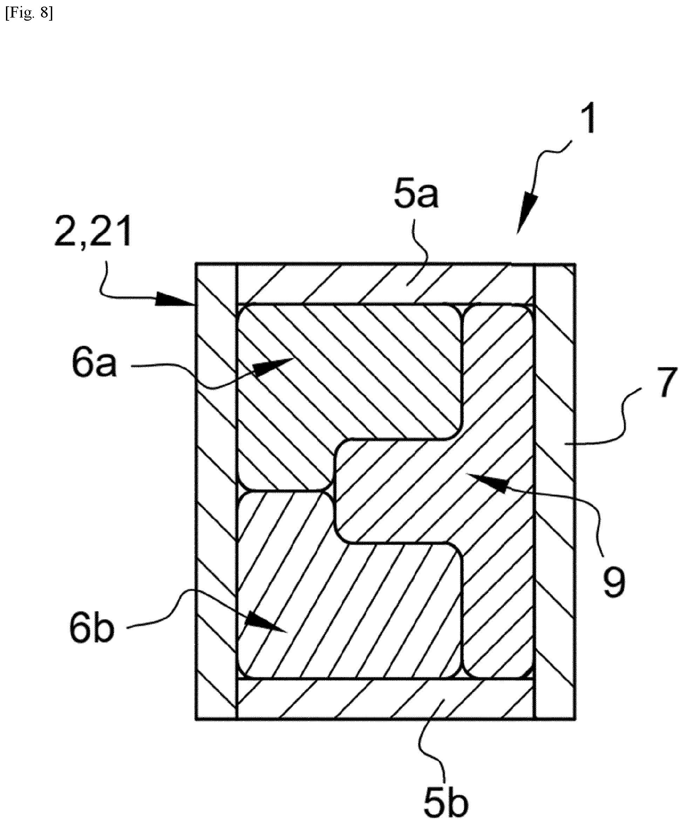

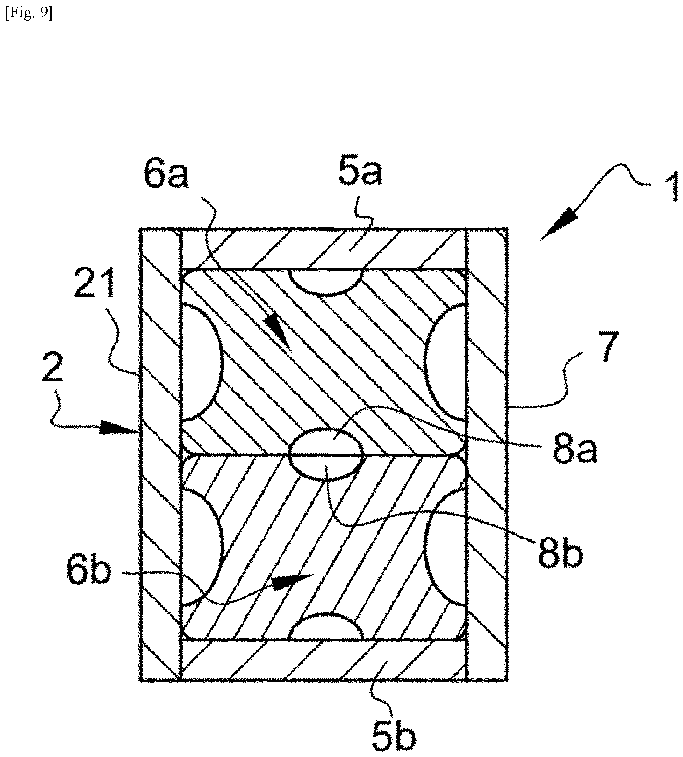

En référence aux [Fig. 7], [Fig. 8] et [Fig. 9], le premier joint 6a et le deuxième joint 6b disposés dans une gorge commune sont pourvus respectivement d'au moins une première encoche 8a et d'au moins une deuxième encoche 8b. Les encoches 8a, 8b sont visibles notamment à la [Fig. 9].

En particulier, les encoches 8a, 8b sont formées respectivement sur les faces transversales en regard des joints 6a, 6b. Les encoches 8a, 8b sont donc en regard et forment la cavité 8 destinée à abriter le système 9 de plaquage.

Il convient de noter que dans l'exemple illustré à la [Fig. 9], le premier joint 6a, respectivement le deuxième joint 6b, peut également être pourvu d'au moins une encoche supplémentaire formée sur une face latérale dudit joint 6a, 6b. Les encoches supplémentaires respectives des joints 6a, 6b sont destinées à abriter un système de plaquage desdits joints 6a, 6b dans la direction radiale X.

Dans ce deuxième mode de réalisation, la cavité 8 (et par conséquent le système 9 de plaquage) peut occuper une position proche de la paroi latérale 21 de la chemise 2 (voir [Fig. 7]), ou une position proche de la paroi latérale 34 du piston 3 (voir [Fig. 8]), ou encore une position médiane, sensiblement à égale distance entre la paroi latérale 21 de la chemise 2 et la paroi latérale 34 du piston 3 (voir [Fig. 9])

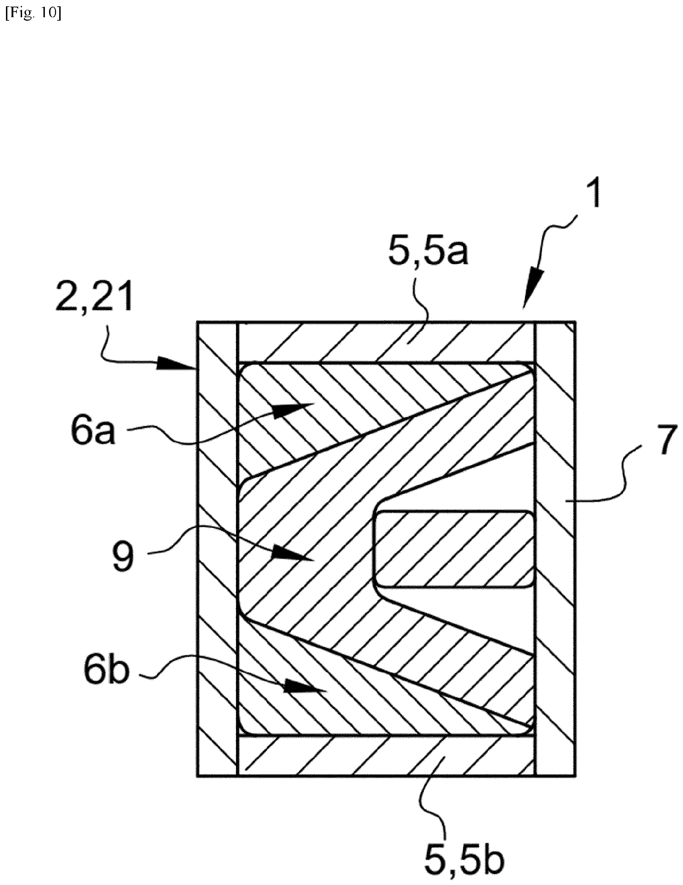

En référence aux [Fig. 10] et [Fig. 11], le premier joint 6a et le deuxième joint 6b sont positionnés à une certaine distance l'un de l'autre. Le premier joint 6a et le deuxième joint 6b forment entre eux un intervalle qui constitue la cavité 8 destinée à abriter le système de plaquage 9.

En particulier, dans l'exemple illustré à la [Fig. 11], le premier joint 6a présente une première face transversale plane disposée en regard du premier créneau 5a et une deuxième face transversale de forme convexe. La deuxième face convexe présente suivant une coupe longitudinale de la machine 1 un profil en V.

Le deuxième joint 6b présente une première face transversale plane disposée en regard du deuxième créneau 5b et une deuxième face transversale concave. La deuxième face concave présente suivant une coupe longitudinale de la machine 1 un profil en V.

Ainsi, la face transversale convexe du premier joint 6a et la face transversale concave du deuxième joint 6b sont disposées en regard l'une de l'autre et présentent des géométries complémentaires.

Le système de plaquage 9 peut être constitué par une masse de fluide en provenance de la chambre de compression 4 et stockée dans la cavité 8.

Dans ce cas, la cavité 8 est en communication fluidique avec l'orifice de passage du joint 6 (ou les orifices de passage des joints pour le deuxième mode de réalisation). C'est le cas de la machine illustrée aux [Fig. 6] et [Fig. 9]

Dans l'exemple illustré à la [Fig. 9], la masse de fluide stockée dans la cavité 8 plaque le premier joint 6a contre le premier créneau 5a, et le deuxième joint 6b contre le deuxième créneau 5b. Ce plaquage s'effectue suivant la direction principale Y du piston 3.

En variante, le système de plaquage 9 peut comprendre un insert solide. C'est le cas de la machine illustrée aux [Fig. 3] à [Fig. 5], [Fig. 7], [Fig. 8], [Fig. 10] et [Fig. 11].

Dans les exemples illustrés aux [Fig. 3] à [Fig. 5], l'insert 9 plaque la première lèvre 61 du joint 6 contre le premier créneau 5a, et la deuxième lèvre 62 du joint 6 contre le deuxième créneau 5b. Ce plaquage s'effectue suivant la direction principale Y du piston 3.

Dans les exemples illustrés aux [Fig. 7], [Fig. 8], [Fig. 10] et [Fig. 11], l'insert 9 plaque le premier joint 6a contre le premier créneau 5a, et le deuxième joint 6b contre le deuxième créneau 5b. Ce plaquage s'effectue suivant la direction principale Y du piston 3.

L'insert formant le système de plaquage est de façon avantageuse réalisé à partir d'un matériau différent de celui des joints 6a, 6b. Le coefficient de dilatation thermique de l'insert est supérieur au coefficient de dilatation thermique des joints 6a, 6b.

Il convient de noter que l'insert s'étend le long de la cavité 8 et peut présenter différents profils suivant une coupe longitudinale de la machine 1.

En particulier, en référence aux [Fig. 3], [Fig. 4] et [Fig. 5], l'insert 9 peut présenter un profil rectangulaire, complémentaire du profil rectangulaire de la cavité 8. Dans ce cas, l'insert 9 est intégralement disposé dans la cavité 8.

En référence à la [Fig. 8], l'insert 9 peut présenter suivant un plan de coupe longitudinale de la machine 1 un profil en T inversé. L'insert 9 comprend donc suivant ce plan de coupe longitudinale deux branches: une première branche qui est disposée dans cavité 8, et une deuxième branche qui est disposée contre l'expandeur 7.

En référence à la [Fig. 10], l'insert 9 peut présenter suivant un plan de coupe longitudinale de la machine 1 un profil en C, complémentaire du profil de la cavité 8 formée entre le premier joint 6a et le deuxième joint 6b.

En référence à la [Fig. 11], l'insert 9 peut présenter suivant un plan de coupe longitudinale de la machine 1 un profil en V. Ce profil présente une forme complémentaire de celle du profil du premier joint 6a et du deuxième joint 6b.

De façon avantageuse, le système de créneau(x) 5 forme un premier groupe d'éléments dans lequel tous les créneaux 5 sont de préférence sensiblement identiques (notamment d'un point de vue de leurs propriétés physico-chimiques). De même, l'ensemble de joint(s) 6 d'étanchéité forme un deuxième groupe d'éléments dans lequel tous les joints 6 sont de préférence sensiblement identiques (notamment d'un point de vue de leurs propriétés physico-chimiques).

De façon avantageuse, le système de créneau(x) 5 dans sa configuration amovible est réalisé dans un matériau différent du matériau du piston 3.

De façon avantageuse, le système de créneau(x) 5 et/ou l'ensemble de joint(s) (6) peuvent être réalisés en polymère (de base PTFE, PEEK, PAEK, PA, PAI, PI, PPS, PPA). Le piston 3 et/ou la chemise 2 peuvent être réalisés en métal (par exemple en acier, alliage de cuivre, alliage d'aluminium, etc.).

Un tel choix de matériaux permet de limiter le risque d'échauffement, d'une part, entre le système de créneau(x) 5 et le piston 3; et d'autre part, entre l'ensemble de joint(s) 6 et la chemise 2.

De façon avantageuse, le piston 3 et la chemise 2 sont des métaux, et peuvent présenter un coefficient de dilatation thermique compris entre 5.10⁻⁶ m/ (m.K) et 30.10⁻⁶ m/(m.K). Le système de créneau(x) 5 et l'ensemble de joint(s) 6 peuvent être en polymère. Le matériau du système de créneau(x) 5 et/ou le matériau de l'ensemble de joint(s) 6 peuvent présenter un coefficient de dilatation thermique supérieur à celui du matériau sélectionné pour le piston 3 et la chemise 2.

Quel que soit le matériau choisi pour le piston 3, et quel que soit le matériau choisi pour le système de créneau(x) 5, un écart suffisant entre les coefficients de dilatation thermique respectifs de ces matériaux est nécessaire pour garantir une contraction différentielle du système de créneau(x) par rapport au piston 3. De façon avantageuse, cet écart est d'au moins 2.10⁻⁶ m/(m.K), et de préférence, compris entre 2.10⁻⁶ à 3.10⁻⁶ m/(m.K).

## Revendications

1. Piston (3) pour une machine (1) à fluide, le piston (3) étant destiné à être monté au moins en partie à l'intérieur d'une chemise (2) de la machine (1) selon un mouvement relatif de va-et-vient par rapport à la chemise (2), le piston (3) s'étendant suivant une direction principale (Y) et comprenant une tête (31) qui comporte une première extrémité (31a) du piston (3), et un manche (32) qui comporte une deuxième extrémité (32a) du piston (3), la première extrémité (31a) du piston (3) étant destinée à délimiter avec la chemise (2) de la machine (1) une chambre (4) de détente et/ou de compression du fluide, le manche (32) comprenant une paroi latérale (34) qui est pourvue d'au moins une gorge annulaire définie entre un premier créneau (5a) et un deuxième créneau (5b), la au moins une gorge annulaire étant munie d'au moins un joint (6) d'étanchéité destiné à coopérer de manière étanche avec une paroi latérale (21) de la chemise (2) de la machine (1), le au moins un joint d'étanchéité (6) étant pourvu d'un orifice de passage destiné à permettre un écoulement d'un flux de fluide depuis la chambre (4) de détente et/ou compression vers la deuxième extrémité (32a) du piston (3),
**caractérisé en ce que** le au moins un joint (6) d'étanchéité comprend au moins une cavité (8) distincte de l'orifice de passage, la cavité (8) comprenant un système (9) de plaquage pour plaquer le joint d'étanchéité (6) contre le premier créneau (5a) et contre le deuxième créneau (5b), suivant la direction principale (Y) du piston (3), le système (9) de plaquage étant de type mécanique et/ou fluidique.

2. Piston (3) selon la revendication précédente, dans lequel le au moins un joint (6) d'étanchéité comprend en une seule et même pièce deux lèvres latérales : une première lèvre (61) disposée en regard du premier créneau (5a), et une deuxième lèvre (62) disposée en regard du deuxième créneau (5b), les lèvres (61, 62) du joint (6) définissant entre elles la cavité (8) destinée à abriter le système (9) de plaquage.

3. Piston (3) selon la revendication 1, dans lequel deux joints d'étanchéité (6a, 6b) distincts sont disposés en vis-à-vis dans la au moins une gorge : un premier joint (6a) en regard du premier créneau (5a) et un deuxième joint (6b) en regard du deuxième créneau (5b).

4. Piston (3) selon la revendication précédente, dans lequel les deux joints présentent des faces en regard qui sont pourvues chacune d'une encoche (8a, 8b), les encoches (8a, 8b) respectives des joints (6a, 6b) étant alignées pour former la cavité (8) destinée à abriter le système (9) de plaquage.

5. Piston (3) selon l'une quelconque des revendications précédentes, dans lequel le système (9) de plaquage se présente sous la forme d'un insert disposé à demeure dans la cavité (8), et/ou comprend une masse de fluide en provenance de la chambre de compression et stockée dans la cavité (8).

6. Piston (3) selon la revendication précédente prise dans son rattachement à la revendication 2, dans lequel la masse de fluide, respectivement l'insert, est configurée pour plaquer suivant la direction principale (Y) du piston (3) la première lèvre (61) du joint (6) contre le premier créneau (5a) et la deuxième lèvre (62) du joint (6) contre le deuxième créneau (5b).

7. Piston (3) selon la revendication 5 prise dans son rattachement à la revendication 3, dans lequel la masse de fluide, respectivement l'insert, est configurée pour plaquer suivant la direction principale (Y) du piston (3) le premier joint (6a) contre le premier créneau (5a), et le deuxième joint (6b) contre le deuxième créneau (5b).

8. Piston (3) selon l'une quelconque des revendications 5 à 7, dans lequel l'insert et le au moins un joint (6) sont constitués respectivement de matériaux présentant des coefficients de dilatation thermique différents, le coefficient de dilatation thermique de l'insert étant supérieur au coefficient de dilatation thermique du joint (6).

9. Machine (1) à fluide, et notamment à fluide cryogénique, par exemple pompe pour fluide cryogénique tel que de l'hydrogène, comprenant une chemise (2) et un piston (3) selon l'une quelconque des revendications précédentes, le piston (3) étant inséré au moins en partie à l'intérieur de la chemise (2) de sorte à former avec la chemise (2) une chambre (4) de détente et/ou de compression du fluide, le piston (3) et la chemise (2) étant configurés pour être mobiles l'un par rapport à l'autre selon un mouvement relatif de va-et-vient.
